# EUROPÄISCHE PATENTSCHRIFT

(11) **EP 0 436 987 B1**
(45) Veröffentlichungstag und Bekanntmachung des Hinweises auf die Patenterteilung: **24.05.1995**
(21) Anmeldenummer: 90203401.6
(22) Anmeldetag: 18.12.1990
(51) Int. Cl.: H01B 5/08

(54) **Elektrisches Freileiterseil mit integrierter optischer Nachrichtenleitung**
Electric overhead conductor with integrated optical communication line
Câble pour lignes électriques aériennes contenant une ligne de communication optique

(30) Priorität: 11.01.1990 DE 4000605
(43) Veröffentlichungstag der Anmeldung: 17.07.1991
(73) Patentinhaber: Philips Patentverwaltung GmbH, 22335 Hamburg (DE); Philips Electronics N.V., 5621 BA Eindhoven (NL)
(72) Erfinder: Lindner, Helmut, Dr., W-5000 Köln 80 (DE); Wenzel, Norbert, Dr., W-506 Bergisch Gladbach 1 (DE); Herff, Robert, W-5000 Köln 50 (DE); Schmitz, Hans-Joachim, W-5014 Kerpen 3 (DE)
(74) Vertreter: Erdmann, Anton, Dipl.-Ing.

(56) Entgegenhaltungen:
- EP-A- 0 347 971

## Beschreibung

Die Erfindung bezieht sich auf ein elektrisches Freileiterseil mit integrierter optischer Nachrichtenleitung, bei welchem metallische Drahtelemente ein Edelstahlröhrchen umgeben, in welchem mindestens ein Lichtwellenleiter enthalten ist, wobei die metallischen Drahtelemente aus einem elektrochemisch unedleren Metall bestehen als das Edelstahlröhrchen.

Bei einer durch die EP-A 28 68 04 bekannten derartigen Anordnung ist anstelle eines der aus Aluminium oder einer Aluminiumlegierung bestehenden Drahtelemente ein die Lichtwellenleiter (LWL) enthaltendes Edelstahlröhrchen eingeseilt. Das Edelstahlröhrchen ist werkstoffbedingt korrosionsfrei, so daß die darin enthaltenden LWL dauerhaft hermetisch eingeschlossen und gegen das Eindringen von Wasser geschützt sind. Wegen der trotz geringer Wandstärke hohen mechanischen Festigkeit des Edelstahlröhrchens sind die lose und mit Überlänge darin verlaufenden LWL auch gegen mechanische Beeinträchtigungen geschützt.

Es zeigte sich jedoch, daß aus unedlerem Werkstoff wie insbesondere Aluminium bestehende Drahtelemente des Freileiterseils infolge des diese kontaktierenden Edelstahlröhrchen durch Korrosion angegriffen werden.

Durch die EP-A 0 347 971 ist eine Anordnung der eingangs genannten Art bekannt, bei welcher das Edelstahlröhrchen von einem versteifenden dickwandigen Metallrohr umgeben ist, dessen Faltnaht offen bleiben darf und deshalb keinen hohen Fertigungsaufwand erfordert.

Der Erfindung liegt die Aufgabe zugrunde, eine Korrosion der Drahtelemente des Freileiterseils der eingangs genannten Art zu verhindern.

Die Lösung gelingt dadurch, daß auf das Edelstahlröhrchen eine wasserundurchlässige und eine kontinuierliche elektrisch leitende Verbindung zwischen dem Edelstahlröhrchen und den dieses umgebenden Drahlelementen bewirkende Beschichtung aufgebracht ist, welche aus einem weniger edlen Material besteht, als das beschichtete Edelstahlröhrchen.

Wegen der Wasserundurchlässigkeit der Beschichtung kann kein elektrolytischer Weg von den Drahtelementen zum Edelstahlröhrchen entstehen. Das weniger edle Material der Beschichtung verursacht keine unzulässig hohe Korrosion der anliegenden Drahtelemente.

Eine Kunststoffbeschichtung der Edelstahlröhrchen ist als Lösung nur dann geeignet, wenn zusätzliche Maßnahmen vorgesehen sind, welche eine kontinuierliche elektrische Kontaktierung des Edelstahlröhrchens mit den benachbarten Drahtelementen des Freileiterseils sicherstellt, beispielsweise durch Einlagerung von metallischen Partikeln aus einem im Vergleich zum Edelstahl unedleren Werkstoff. Ohne eine solche Durchkontaktierung könnten bei Blitzeinschlägen in dem Freileiterseil hohe Potentialunterschiede zwischen den Drahtelementen und dem Edelstahlröhrchen entstehen, welche zu Durchschlägen und Durchbrechungen der Kunststoffschicht oder gar zu Beschädigungen des Edelstahlröhrchens führen würden.

Eine bevorzugte Lösung ist dadurch gekennzeichnet, daß die Beschichtung aus einem Metall besteht, welches in der elektrochemischen Spannungsreihe zwischen den Materialien der Drahtelemente und des Edelstahlröhrchens eingeordnet ist. Mit einer Metallschicht lassen sich besonders gut sowohl die Wasserundurchlässigkeit als auch die elektrische Kontaktierung realisieren. Besonders geeignet ist für die Beschichtung ein Metall, welches in der elektrochemischen Spannungsreihe dem Material der Drahtelemente näher liegt als dem Material der Edelstahlröhrchen.

Eine vorteilhafte Lösungsmöglichkeit besteht darin, daß das Edelstahlröhrchen verzinkt ist.

Eine besonders einfach zu realisierende Lösung ist dadurch gekennzeichnet, daß das Edelstahlröhrchen vollständig von einer überlappt aufgebrachten Bebänderung umgeben ist, deren Überlappungsbereich insbesondere mittels Schmelzkleber verklebt ist. Durch die Verklebung der Überlappungsbereiche wird das Eindringen von Wasser verhindert.

Vorzugsweise wird für die Bebänderung das gleiche Metall gewählt, aus dem die Drahtelemente bestehen.

Das Metallband ist besonders einfach aufzubringen, wenn es längslaufend um das Edelstahlröhrchen gefaltet wird.

Eine Verletzung des dünnschichtigen Metallbandes, beispielsweise ein Einreißen, wird dadurch verhindert, daß es mit der Oberfläche des Edelstahlröhrchens verklebt wird. Durch den Kleber darf die elektrische Kontaktierung mit dem Edelstahlröhrchen nicht verhindert werden. Der Kleber kann deshalb leitfähig sein. Bevorzugt wird jedoch, daß das Metallband längslaufend um das Edelstahlröhrchen gelegt und mit dessen Oberfläche derart verklebt ist, daß kleberfreie Kontaktzonen zwischen dem Edelstahlröhrchen und dem Metallband verbleiben, in welchen plastisch ausgeformte Bereiche des Metallbandes an die Oberfläche des Edelstahlröhrchens gedrückt sind.

Die kleberfreien Bereiche des Metallbandes werden vorzugsweise durch den während der Erhitzung des Schmelzklebers aufgebrachten Druck plastisch an das Edelstahlröhrchen gedrückt. Eine Lösung, bei welcher ohne Überlappungsstellen eine hohe Wasserdichtigkeit erreicht wird, ist dadurch gekennzeichnet, daß um das Edelstahlröhrchen zwei Metallbänder jeweils überlappungsfrei derart gefaltet sind, daß die Trennfugen der Bänder sich etwa diametral gegenüberliegen, und daß das erste Metallband mit dem Edelstahlröhrchen und das zweite Metallband mit dem ersten Metallband elektrisch leitend kontaktiert ist.

Die kleberfreien Kontaktbereiche sind vorzugsweise möglichst weit mindesten 180° vom außenliegenden Überlappungsende des Metallbandes entfernt, damit der von außen angreifenden Feuchtigkeit ein möglichst langer Kleberweg entgegensteht. Aus dem gleichen Grunde ist es vorteilhaft, daß die kleberfreien Kontaktzonen in einen Streifenbereich des Metallbandes angeordnet sind, welcher sich über einen Winkelbereich von weniger als 90° erstreckt. Ein relativ schmaler Streifenbereich bedeutet, daß große Breiten für die durchgehend verklebten Abschnitte verbleiben.

Damit das Metallband auch im Bereich der kontaktierenden Streifen fest am Edelstahlröhrchen haftet, ist vorgesehen, daß Schmelzkleber im Streifenbereich gitterartig aufgebracht ist.

Die Erfindung wird anhand von in der Zeichnung dargestellten Ausführungsbeispielen näher erläutert.
- Fig. 1: zeigt einen Querschnitt durch eine erste Ausführungsform einer erfindungsgemäß beschichteten Nachrichtenleitung.
- Fig. 2: zeigt einen Ausschnitt des für die Ausführung nach Fig. 1 zur Beschichtung verwendeten Metallbandes.
- Fig. 3: zeigt schematisch einen Querschnitt durch eine zweite Ausführungsform einer erfindungsgemäß beschichteten Nachrichtenleitung.
- Fig. 4: zeigt die Anordnung einer erfindungsgemäß beschichteten Nachrichtenleitung in einem Freileiterseil.

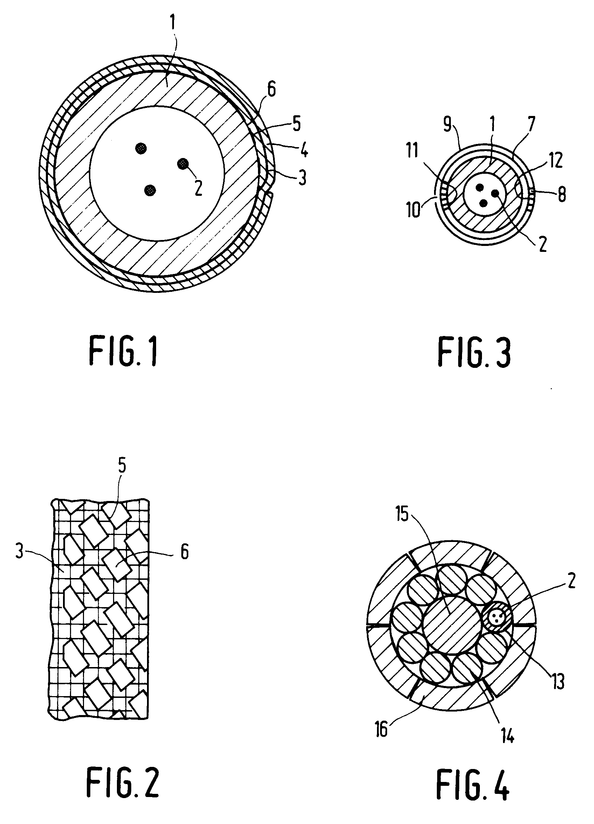

Gemäß Fig. 1 verlaufen in einem nahtgeschweißten Edelstahlröhrchen 1 (Wandstärke etwa 0,1 bis 0,2 mm) drei LWL 2 mit Überlänge. Um das Edelstahlröhrchen 1 ist ein mit einer etwa 10 um dicken Schmelzkleberschicht 3 beschichtetes und etwa 0,1 mm dickes Aluminiumband 4 mit einer Überlappungsbreite von etwa 360° gefaltet. Ein an einer Endkante des Aluminiumbandes 4 sich über einen Umfangswinkel von ca. 30° erstreckender Kontaktierungsstreifen ist gitterartig mit Kleberstreifen 5 versehen, zwischen welchen kleberfreie Bereiche 6 mit jeweils etwa 5 mm² liegen, wie es in Fig. 2 näher erkennbar ist.

Beim Verkleben werden die Schmelzkleberschicht 3 und die Kleberstreifen 5 erwärmt. Gleichzeitig wird beispielsweise mittels eines Ziehsteines, durch dessen Bohrung das beschichtete Edelstahlröhrchen 1 gezogen wird, radialer Druck aufgebracht. Durch diesen Druck werden die Bereiche 6 des Aluminiumbandes 4 durch plastische Verformung dauerhaft an die Oberfläche des Edelstahlröhrchens 1 gepreßt, wodurch sich über die Gesamtlänge der Nachrichtenleitung ein elektrischer Kontakt ergibt.

Es ist ebenfalls möglich, beispielsweise durch einen Prägevorgang erhabene Bereiche 6 bereits vor dem Auffalten auf dem Aluminiumband zu bilden. Eine Gitterstruktur nach Fig. 2 kann auch in abgewandelter Form verwirklicht werden, beispielsweise durch leiterförmig aufeinanderfolgende Querstreifen aus Schmelzkleber.

In Fig. 3 ist auf das Edelstahlröhrchen 1 ein erstes Metallband 7 überlappungsfrei mit einer Trennfuge 8 geklebt, wobei ein Kontaktstreifen 11 wie bei der Ausführung nach Fig. 1 der Trennfuge 8 diametral gegenüberliegt.

Dort ist die elektrische Kontaktierung des Edelstahlröhrchens 1 mit dem Metallband 7 bewirkt. Ein zweites Metallband 9 ist zum ersten gleichartigen Metallband 7 um 180° versetzt überlappungsfrei mit einer Trennfuge 10 aufgeklebt. Ein Kontaktstreifen 12 bewirkt die elektrische Kontaktierung beider Bänder 7 und 9.

Die erfindungsgemäß aufgebrachten und aus sehr dünnen Metallbändern 3 bzw. 7 und 9 bestehenden Beschichtungen sind wegen der Verklebung mechanisch widerstandsfähig. Sollte dennoch ein Loch in der Beschichtung entstehen, kann eindringendes Wasser nicht zur Zerstörung des Edelstahlröhrchens 1 führen, weil dieses materialbedingt korrosionsfest ist. Korrodieren kann dann allenfalls die anliegende Beschichtung, nicht jedoch die Drahtelemente, da der Elektrolytweg zu den umgebenden unedleren Drahtelementen zu lang ist.

In Figur 4 ist eine gemäß Fig. 1 oder Fig. 3 ausgebildete Nachrichtenleitung 13 mit zugfesten Freileiterdrähten 14 um einen zugfesten Kern 15 verseilt. Die darüber gegensinnig verseilte Schicht wird von profilierten Aluminium-Drahtelementen 16 gebildet, welche auch einen kreisrunden Querschnitt aufweisen könnten.

## Patentansprüche

1. Elektrisches Freileiterseil mit integrierter optischer Nachrichtenleitung (13), bei welchem metallische Drahtelemente (14,15,16) ein Edelstahlröhrchen (1) umgeben, in welchem mindestens ein Lichtwellenleiter (2) enthalten ist, wobei die metallischen Drahtelemente aus einem elektrochemisch unedleren Metall bestehen als das Edelstahlröhrchen,
dadurch gekennzeichnet, daß auf das Edelstahlröhrchen (1) eine wasserundurchlässige und eine kontinuierliche elektrisch leitende Verbindung zwischen dem Edelstahlröhrchen und den dieses umgebenden Drahtelementen (14,15,16) bewirkende Beschichtung aufgebracht ist, welche aus einem weniger edlen Material besteht, als das beschichtete Edelstahlröhrchen.

2. Freileiterseil nach Anspruch 1,
dadurch gekennzeichnet, daß das Edelstahlröhrchen (1) von einer geschlossenen Kunststoffschicht bedeckt ist, welche elektrisch leitende Bestandteile enthält.

3. Freileiterseil nach Anspruch 1,
dadurch gekennzeichnet, daß die Beschichtung (3,7,9) aus einem Metall besteht, welches in der elektrochemischen Spannungsreihe zwischen den Materialien der Drahtelemente (14,15,16) und des Edelstahlröhrchens eingeordnet ist.

4. Freileiterseil nach Anspruch 3,
dadurch gekennzeichnet, daß das Metall der Beschichtung (3,7,9) in der elektrochemischen Spannungsreihe dem Material der Drahlelemente (14,15,16) näher liegt als dem Material der Edelstahlröhrchen (1).

5. Freileiterseil nach Anspruch 3 oder 4,
dadurch gekennzeichnet, daß das Edelstahlröhrchen (1) verzinkt ist.

6. Freileiterseil nach Anspruch 3 oder 4,
dadurch gekennzeichnet, daß das Edelstahlröhrchen (1) vollständig von einer überlappt aufgebrachten Bebänderung (3,7,9) umgeben ist, deren Überlappungsbereich insbesondere mittels Schmelzkleber (3) verklebt ist.

7. Freileiterseil nach Anspruch 6,
dadurch gekennzeichnet, daß die Bebänderung (3,7,9) aus Metall, insbesondere aus dem gleichen Metall wie die Drahtelemente (16) besteht.

8. Freileiterseil nach Anspruch 6 oder 7,
dadurch gekennzeichnet, daß das Metallband (3,7,9) längslaufend um das Edelstahlröhrchen (1) gefaltet und mit dessen Oberfläche mittels eines elektrisch leitfähigen Klebers verklebt ist.

9. Freileiterseil nach Anspruch 6 oder 7,
dadurch gekennzeichnet, daß das Metallband (3,7,9) längslaufend um das Edelstahlröhrchen gelegt und mit dessen Oberfläche derart verklebt ist, daß kleberfreie Kontaktzonen (6) zwischen dem Edelstahlföhrchen (1) und dem Metallband (3,7,9) verbleiben, in welchen plastisch ausgeformte Bereiche des Metallbandes (3,7,9) an die Oberfläche des Edelstahlröhrchens (1) gedrückt sind.

10. Freileiterseil nach Anspruch 3 oder 4,
dadurch gekennzeichnet, daß um das Edelstahlröhrchen (1) zwei Metallbänder (7,9) jeweils überlappungsfrei derart gefaltet sind, daß die Trennfugen (8 bzw. 10) der Bänder sich etwa diametral gegenüberliegen, und daß das erste Metallband (7) mit dem Edelstahlröhrchen (1) und das zweite Metallband (9) mit dem ersten Metallband (7) elektrisch leitend kontaktiert ist.

11. Freileiterseil nach Anspruch 9,
dadurch gekennzeichnet, daß die kleberfreien Kontaktzonen (6) mindestens 180' vom außenliegenden Überlappungsende des Metallbandes (3,7,9) entfernt sind.

12. Freileiterseil nach Anspruch 9 oder 11
dadurch gekennzeichnet, daß die kleberfreien Kontaktzonen (6) in einen Streifenbereich des Metallbandes (3,7,9) angeordnet sind, welcher sich über einen Winkelbereich von weniger als 90° erstreckt.

13. Freileiterseil nach Anspruch 12,
dadurch gekennzeichnet, daß Schmelzkleber im Streifenbereich gitterartig (5) aufgebracht ist.

## Claims

1. An electrical overhead cable comprising an integrated optical communications line (13), in which metallic wire elements (14, 15, 16) surround a tube (1) of high-grade steel which accommodates at least one optical waveguide (2), said metallic wire elements being made from a metal which, electrochemically, is less noble than the high-grade steel used for the tube, characterized in that the tube (1) of high-grade steel (1) is provided with a water-tight coating establishing a continuous electrically conducting connection between the tube of high-grade steel and the wire elements (14, 15, 16) surrounding this tube, said coating being made from a less noble material than the coated tube of high-grade steel.

2. An overhead cable as claimed in Claim 1, characterized in that the tube (1) of high-grade steel is coated with a continuous layer of synthetic material, which contains electrically conducting components.

3. An overhead cable as claimed in Claim 1, characterized in that the coating (3, 7, 9) consists of a metal which is arranged in the electrochemical series between the materials of the wire elements (14, 15, 16) and of the tube of high-grade steel.

4. An overhead cable as claimed in Claim 3, characterized in that the metal of the coating (3, 7, 9) lies more closely to the material of the wire elements (14, 15, 16) than to the material of the tube (1) of high-grade steel in the electrochemical series.

5. An overhead cable as claimed in Claim 3 or 4, characterized in that the tube (1) of high-gradee steel is zinc-plated.

6. An overhead cable as claimed in Claim 3 or 4, characterized in that the tube (1) of high-grade steel is fully surrounded by a system of tapes (3, 7, 9), which is arranged with overlap and whose overlapping parts are stuck together more particularly by means of hot-melt adhesive (3).

7. An overhead cable as claimed in Claim 6, characterized in that the system of tapes (3, 7, 9) consists of metal, more particularly of the same metal as the wire elements (16).

8. An overhead cable as claimed in Claim 6 or 7, characterized in that the metal tape (3, 7, 9) is folded around the tube (1) of high-grade steel in the longitudinal direction and is adhered to its surface by means of an electrically conducting adhesive.

9. An overhead cable as claimed in Claim 6 or 7, characterized in that the metal tape (3, 7, 9) is arranged so that it surrounds the tube of high-grade steel in the longitudinal direction and adheres to the surface of the tube in such a manner that contact zones (6) free of adhesive are left between the tube (1) of high-grade steel and the metal tape (3, 7, 9), in which plastically deformed parts of the metal tape (3, 7, 9) are pressed against the surface of the tube (1) of high-grade steel.

10. An overhead cable as claimed in Claim 3 or 4, characterized in that two metal tapes (7, 9) are folded without overlap around the tube (1) of high-grade steel in such a manner that the parting lines (8 and 10, respectively) of the tapes are arranged approximately diametrically opposite to each other and in that the first metal tape (7) electrically conductively contacts the tube (1) of high-grade steel and the second metal tape (9) electrically conductive contacts the first metal tape (7).

11. An overhead cable as claimed in Claim 9, characterized in that the contact zones (6) free of adhesive are located at least 180° from the external overlap end of the metal tape (3, 7, 9).

12. An overhead cable as claimed in Claim 9 or 11, characterized in that the contact zones (6) free of adhesive are arranged in a strip-shaped part of the metal tape (3, 7, 9), which extends over an angular range of less than 90°.

13. An overhead cable as claimed in Claim 12, characterized in that hot-melt adhesive is applied in the form of a grating (5) in the strip-shaped part.

## Revendications

1. Câble pour lignes électriques aériennes comportant une ligne de communication optique intégrée (13), dans lequel des éléments en fil métallique (14, 15, 16) entourent un tube en acier noble (1), dans lequel est enfermé au moins un guide de lumière (2), les éléments en fil métallique étant constitués d'un métal électro-chimiquement moins noble que le tube en acier noble, caractérisé en ce que l'on a déposé sur le tube en acier noble (1) un revêtement qui est étanche à l'eau et qui établit une connexion continue électriquement conductrice entre ledit tube en acier noble et les éléments en fil (14, 15, 16) qui l'entourent, ledit revêtement est constitué d'un matériau un peu moins noble que le tube en acier noble revêtu.

2. Câble pour lignes électriques aériennes selon la revendication 1, caractérisé en ce que le tube en acier noble (1) est revêtue d'une couche synthétique fermée comportant des composants électriquement conducteurs.

3. Câble pour lignes électriques aériennes selon la revendication 1, caractérisé en ce que le revêtement (3, 7, 9) est constitué d'un métal qui dans la série des forces électrochimiques est rangé entre les matériaux des éléments en fil (14, 15, 16) et ceux du tube en acier noble.

4. Câble pour lignes électriques aériennes selon la revendication 3, caractérisé en ce que le métal du revêtement (3, 7, 9) dans la série des forces électrochimiques est plus rapproché du matériau des éléments en fil (14, 15, 16) que du matériau du tube en acier noble (1).

5. Câble pour lignes électriques aériennes selon la revendication 3 ou 4, caractérisé en ce que le tube en acier noble (1) est zingué.

6. Câble pour lignes électriques aériennes selon la revendication 3 ou 4, caractérisé en ce que le tube en acier noble (1) est complètement enveloppé par un rubanage (3, 7, 9) qui le recouvre partiellement, dont la zone de recouvrement est collée, notamment, au moyen d'une colle à fusion (3).

7. Câble pour lignes électriques aériennes selon la revendication 6, caractérisé en ce que le rubanage (3, 7, 9) est constitué de métal, notamment du même métal que les éléments en fil (16).

8. Câble pour lignes électriques aériennes selon la revendication 6 ou 7, caractérisé en ce que la bande métallique (3, 7, 9) est enroulée longitudinalement autour du tube en acier noble (1) pour être collée à la surface dudit tube au moyen d'une colle électriquement conductrice.

9. Câble pour lignes électriques aériennes selon la revendication 6 ou 7, caractérisé en ce que la bande métallique (3, 7, 9) est enroulée longitudinalement autour du tube en acier noble (1) pour être collée à sa surface de manière qu'entre le tube en acier noble (1) et la bande métallique (3, 7, 9) il reste des zones de contact exemptes de colle (6) dans lesquelles des zones élastiquement déformées de la bande métallique (3, 7, 9) sont serrées à la surface du tube en acier noble (1).

10. Câble pour lignes électriques aériennes selon la revendication 3 ou 4, caractérisé en ce que chaque fois deux bandes métalliques (7, 9) sont pliées autour du tube en acier noble (1) sans se recouvrir partiellement de manière que les joints de séparation (8 respectivement 10) des bandes sont disposés à peu près diamétralement l'un opposé à l'autre et, en ce que la première bande métallique (7) établit un contact électriquement conducteur avec le tube en acier noble (1) et que la deuxième bande métallique (9) établit un contact électriquement conducteur avec la première bande métallique (7).

11. Câble pour lignes électriques aériennes selon la revendication 9, caractérisé en ce que les zones de contact exemptes de colle (6) sont espacées au moins de 180° de l'extrémité de recouvrement extérieure de la bande métallique (3, 7, 9).

12. Câble pour lignes électriques aériennes selon la revendication 9 ou 11, caractérisé en ce que les zones de contact exemptes de colle (6) sont disposées dans une zone de la bande métallique (3, 7, 9) présentant la forme d'un ruban, qui s'étend sur un angle inférieur à 90°.

13. Câble pour lignes électriques aériennes selon la revendication 12, caractérisé en ce que dans la zone des rubans une colle à fusion est appliquée en forme d'un réseau (5).
